# EUROPEAN PATENT SPECIFICATION

(11) **EP 1 129 282 B1**
(45) Date of publication and mention of the grant of the patent: **02.07.2003**
(21) Application number: 99970714.4
(22) Date of filing: 15.10.1999
(51) Int. Cl.: F02M 27/02, F02B 51/02

(54) **APPARATUS FOR FEEDING A COMPOSITION CONTAINING CERIUM DIOXIDE INTO THE COMBUSTION CHAMBER OF AN INTERNAL COMBUSTION ENGINE**
VORRICHTUNG ZUR ZUFUHR EINER MISCHUNG MIT CERIUMDIOXID IN DIE BRENNKAMMER EINER BRENNKRAFTMASCHINE
APPAREIL SERVANT A CHARGER UNE COMPOSITION CONTENANT DU DIOXYDE DE CERIUM DANS LA CHAMBRE DE COMBUSTION D'UN MOTEUR A COMBUSTION INTERNE

(30) Priority: 16.10.1998 DE 29818498 U
(43) Date of publication of application: 05.09.2001
(73) Proprietor: Celcat International Ltd., 552 01 Thessaloniki (GR)
(72) Inventor: MARKOU, Miltiathis, GR-552 01 Thessaloniki (GR)
(74) Representative: Liesegang, Roland, Dr.-Ing.
(86) International application number: EP9907853
(87) International publication number: WO00023703

(56) References cited:
- DE-A- 2 649 407
- GB-A- 2 010 393
- US-A- 4 067 685
- US-A- 4 125 091
- US-A- 5 282 445

## Description

The invention refers to an apparatus according to the preamble of claim 1. In a known apparatus of this kind (EP 0 485 551 A1) a reservoir for the composition is provided, which has an inlet for ambient air and an outlet connected to the inlet system of the internal combustion engine. Ambient air is sucked into the reservoir via the inlet due to the vacuum in the inlet system and said ambient air is conveyed through the filling thus causing particles of the cerium dioxide containing composition to be entrained out of the filling and conveyed into the combustion chamber via the inlet system. This vacuum is subject to fluctuations caused by the operation of the engine and the vacuum is not reliably sufficient for a regular conveyance of particles containing cerium dioxide into the combustion chamber. This may lead to an aggravation of the exhaust behavior and the fuel consumption of the internal combustion engine.

The object of the invention is to design an apparatus of the above-mentioned kind such that a desired amount of particles containing cerium dioxide will permanently be conveyed into the combustion chamber of an internal combustion engine at each and all operating conditions of the internal combustion engine, in order to constantly provide the desired catalytic effect of the cerium dioxide irrespective of the prevailing operating conditions.

This object is solved by claim 1.

In the invention, the reservoir or the container for the fibrous or powdery composition containing cerium dioxide does not communicate with the ambient air but with a pressure source, in particular with a compressor. The compressor conveys air through the pressure inlet into the reservoir and via the composition contained therein to an outlet, through which particles containing cerium dioxide transported by the pressurized air flow are fed into the inlet system of the machine under predeterminable conditions (pressure, quantity). The speed of the compressor is controllable so that desired conveyance conditions in the line between the storage and the inlet system of the internal combustion engine may be established fully independent of the vacuum in the inlet system of the internal combustion engine. Thus, desired quantities of the composition may be fed into the combustion chamber of the internal combustion engine under all operating conditions.

Advantageous embodiments of the invention are defined in the subclaims.

The invention will now be explained in detail by means of schematic drawings with reference to an embodiment.
Fig. 1 shows a scheme of an apparatus according to the invention;
Fig. 2 shows a circuit diagram for controlling a compressor provided in the apparatus according to Fig. 1; and
Fig. 3 shows a reservoir for accommodating a composition containing cerium dioxide according to the invention in a partially cut view.

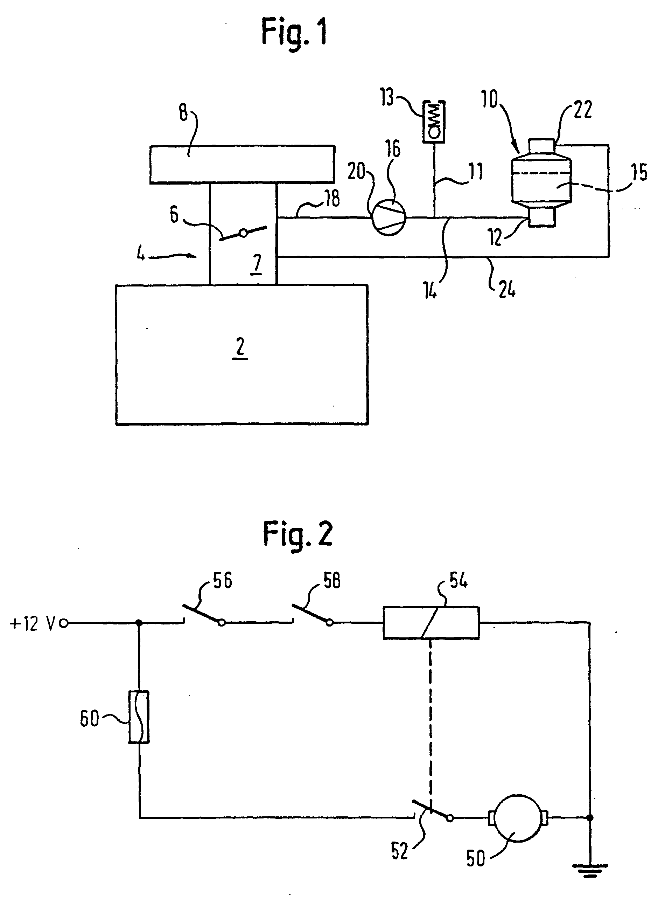

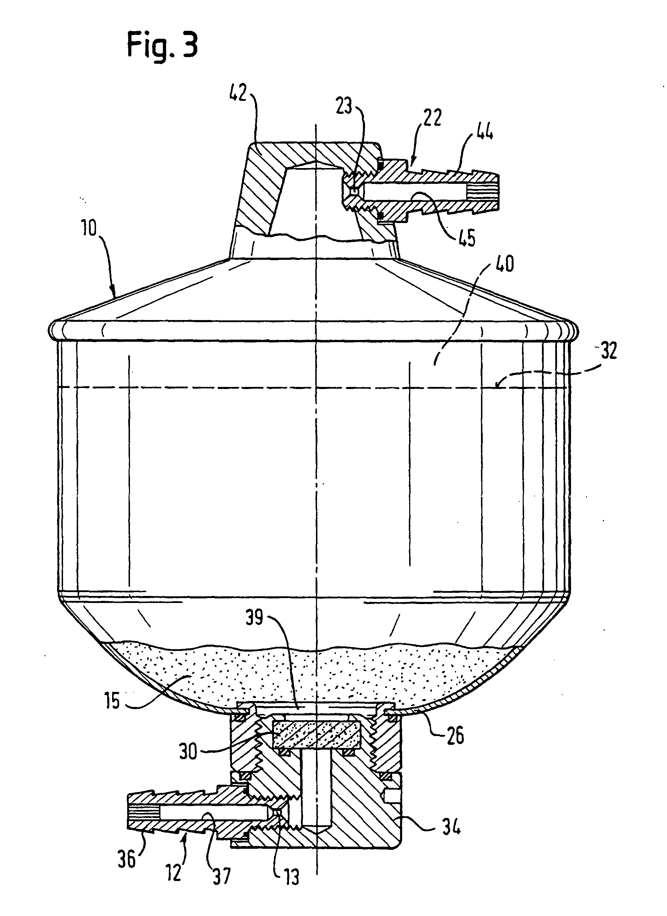

In Fig. 1, reference numeral 2 designates an internal combustion engine of conventional design, which may for instance be provided as an Otto engine or a diesel engine. Reference numeral 4 designates an intake duct of the inlet system of this engine, wherein reference numeral 6 represents a throttle valve. Reference numeral 8 designates an air filter. A vessel 10 containing a dry, fibrous or powdery composition is arranged external of the internal combustion engine 2. The vessel 10 shown in detail in Fig. 3 has a pressurized air inlet 12 which communicates with the outlet of a small compressor 16 via a pressurized air line 14. The inlet 20 of the compressor communicates with the intake side of the air filter 8 via a line 18 (not shown in detail).

The vessel 10, which is filled by a fibrous or powdery composition containing cerium dioxide (CeO2), further comprises an outlet 22 at the upper end of the vessel. The outlet 22 is connected via a line 24 to the section 7 of the intake duct 4 located downstream the throttle valve 6.

Pressurized air fed into the vessel 10 through the compressor 16 blows through the filling and thereby entrains particles containing cerium dioxide. The pressurized air/particle flow obtained in that manner is fed via line 24 into the portion 7 of the intake duct 4 and from there into the combustion chamber (not shown) of the internal combustion engine 2.

The filling of the vessel 10 consists of a group of rare earth compounds, wherein cerium dioxide preferably predominates in the form of an extremely fine powder of microcrystalline particles.

Compared to Cer-based, conventional three-way catalytic converters, the following advantages are obtained by the apparatus according to the invention:
- the cold start properties are improved;
- the range of the fuel/air ratio usable during operation is extended;
- the resistance against deactivation is improved;
- CO, HC, NOx proportions in the exhaust gas are significantly reduced:
- the life of the three-way catalytic converter is increased by the factor 2.

The design of the vessel 10 including the pressurized air inlet 12 and the outlet 22 can be seen in detail from Fig. 3. A foot member 34 is provided in the bottom 26, with a pressure inlet stud 36 being tightly screwed to the foot member. A bore 37 of the pressure inlet stud 36 has at its outlet a throttle in the form of a nozzle-like constriction 13. From there the fed-in pressurized air reaches the filling 15 via a filter disk 30 made of a highly porous sintered bronze and via an opening in the bottom 26. In the fully filled state, the level 32 of this filling should be that approximately 75% of the entire internal volume of the vessel 10 is filled, so that an air space 40 above the filling level 32 always remains, which in consequence takes at least 25% of this inner volume.

The outlet 22 of the vessel 10 having an outlet stud 44 is located in a dome 42 at the head of the vessel 10, the inner bore 45 of said outlet stud 44 having at the inlet a throttle 23 in the form of a nozzle-like constriction.

During operation of the compressor 16 air pressed in through the opening 39 in the bottom 26 of the vessel 10 is passed through the filling 15 and thereby entrains particles containing cerium dioxide, which are transported via the outlet stud 44 into the line 24 (Fig. 1) and from there into the portion 7 of the intake portion 4.

Fig. 2 shows a circuit diagram of an electric control for the compressor 16. In this Figure, 15 designates an electric drive motor of the compressor 16. This compressor motor is controlled by a relay switch 52 of a relay 54, which is operated upon operation of the ignition key and thus by closing an ignition switch 56 as soon as a microswitch 58 is closed. This may be performed automatically when exceeding a predetermined engine speed, such as the idling speed. 60 designates a fuse.

Since the air quantity to be compressed is small, a very small amount of power is sufficient for the compressor, so that a small compressor having a low energy rating may be used.

The compressor 16 may be bridged by a bypass line having a bypass valve (not shown), from which the branch line 11 according to Fig. 1 may also be branched off, with a return valve 13 (Fig. 1) being arranged at the end thereof.

The features disclosed in the above description, in the claims and in the drawing, may be meaningful for realizing the invention in its different embodiments individually as well as in combination with one another.

## Claims

1. An apparatus for feeding a fibrous or powdery composition containing cerium dioxide into the combustion chamber of an internal combustion engine (2), said apparatus having a reservoir (10) containing said composition and a line (24) communicating with an outlet (22) of the reservoir (10) and with said combustion chamber, **characterized in that** the reservoir (10) has an inlet (12) which communicates with a pressurized air source (16), the air pressure of said air source being controlled independently of a vacuum prevailing in an inlet system of the internal combustion engine under operation, wherein the air source (16) is a compressor, the speed of which being controlled so that desired conveyance conditions in the line (24) are established.

2. An apparatus as claimed in claim 1, **characterized in that** an air inlet (20) of the compressor (16) communicates with an air filter (8) of the internal combustion engine.

3. An apparatus as claimed in one of claims 1 or 2, **characterized in that** the outlet (22) of the reservoir (10) communicates with the combustion chamber of the internal combustion engine (2) via an inlet system (4) of the internal combustion engine (2).

4. An apparatus as claimed in one of claims 1 to 3, **characterized in that** a return valve (13) for discharging air into the atmosphere is arranged at an end of a branch line (11) which is branched off from a pressurized air line (14) between the outlet of the compressor (16) and the pressurized air inlet (12) of the reservoir (10).

5. An apparatus as claimed in one of claims 1 to 4, **characterized in that** the reservoir (10) consists of a vessel with the inlet (12) being connected to the bottom (26) of the vessel via a filter (30).

6. An apparatus as claimed in claim 5, **characterized in that** the filter (30) consists of a highly-porous sintered bronze.

7. An apparatus as claimed in claim 5 or 6, **characterized in that** the outlet (22) is provided at the upper end of the vessel (10) above the filling level (32) thereof.

8. An apparatus as claimed in one of claims 1 to 7, **characterized in that** the reservoir (10) has reached its admissible filling level when utilizing 75% of the storage volume, so that an air volume of at least 25% constantly remains above the filling level (32) of the reservoir.

9. An apparatus as claimed in one of claims 1 to 8, **characterized in that** the pressurized air inlet (12) and the outlet (22) each have a constriction (13, 23).

## Patentansprüche

1. Vorrichtung zum Einbringen einer Cerdioxid enthaltenden, faserigen oder pulverigen Zusammensetzung in den Brennraum einer Brennkraftmaschine (2) mit innerer Verbrennung, wobei die Vorrichtung einen Speicher (10) aufweist, der über eine mit einem Auslaß (22) des Speichers (10) verbundene Leitung (24) mit dem Brennraum kommuniziert, dadurchg ekennzeichnet, daß der Speicher (10) einen Einlaß (12) hat, der mit einer Druckluftquelle (16) kommuniziert, wobei der Luftdruck der Druckluftquelle unabhängig von einem Unterdruck im Einlaßsystem der Brennkraftmaschine im Betrieb geregelt wird und die Druckluftquelle (16) ein Kompressor ist, dessen Geschwindigkeit so geregelt ist, daß gewünschte Förderbedingungen in der Leitung (24) hergestellt werden.

2. Vorrichtung nach Anspruch 1, **dadurch gekennzeichnet, daß** der Einlaß (20) des Kompressors (16) mit einem Luftfilter (8) der Brennkraftmaschine (2) kommuniziert.

3. Vorrichtung nach Anspruch 1 oder 2, **dadurch gekennzeichnet, daß** der Auslaß (22) des Speichers (10) über das Einlaßsystem (4) der Brennkraftmaschine (2) mit deren Brennraum kommuniziert.

4. Vorrichtung nach einem der Ansprüche 1 bis 3, **dadurch gekennzeichnet, daß** ein Rückschlagventil (13) zum Abblasen von Luft in die Umgebung am Ende einer Zweigleitung (11) angeordnet ist. welche von einer Druckluftleitung (14) zwischen dem Auslaß des Kompressors (16) und dem Drucklufteinlaß (12) des Speichers (10) abgezweigt ist.

5. Vorrichtung nach einem der Ansprüche 1 bis 4, **dadurch gekennzeichnet, daß** der Speicher (10) aus einem Gefäß besteht, an dessen Boden (26) der Drucklufteinlaß (12) über ein Filter (30) angeschlossen ist.

6. Vorrichtung nach Anspruch 5, **dadurch gekennzeichnet, daß** das Filter (30) aus hochporöser Sinterbronze besteht.

7. Vorrichtung nach Anspruch 5 oder 6, **dadurch gekennzeichnet, daß** der Auslaß (22) am oberen Ende des Gefäßes (10) oberhalb dessen Füllspiegel (32) vorgesehen ist.

8. Vorrichtung nach einem der Ansprüche 1 bis 7, **dadurch gekennzeichnet, daß** der Speicher (10) seinen zulässigen Füllstand bei Ausnutzung von 75% des Speichervolumens erreicht hat, so daß über dem Füllspiegel (32) des Speichers stets ein Luftvolumen von mindestens 25% verbleibt.

9. Vorrichtung nach einem der Ansprüche 1 bis 8, **dadurch gekennzeichnet, daß** der Drucklufteinlaß (12) und der Auslaß (22) jeweils eine Drossel (13, 23) enthalten.

## Revendications

1. Appareil servant à charger une composition fibreuse ou poudreuse contenant du dioxyde de cérium dans la chambre de combustion d'un moteur à combustion interne (2), ledit appareil comprenant un réservoir (10) contenant ladite composition et un conduit (24) communiquant avec une sortie (22) du réservoir (10) et avec ladite chambre de combustion, **caractérisé en ce que** le réservoir (10) présente une entrée (12) qui communique avec une source d'air sous pression (16), la pression de l'air de ladite source d'air étant commandée indépendamment d'un vide régnant dans un système d'entrée du moteur à combustion interne durant le fonctionnement, dans lequel la source d'air (16) est un compresseur, dont la vitesse est commandée de telle sorte que des conditions de transport souhaitées soient établies dans le conduit (24).

2. Appareil suivant la revendication 1, **caractérisé en ce qu'**une entrée d'air (20) du compresseur (16) communique avec un filtre à air (8) du moteur à combustion interne.

3. Appareil suivant l'une quelconque des revendications 1 ou 2, **caractérisé en ce que** la sortie (22) du réservoir (10) communique avec la chambre de combustion du moteur à combustion interne (2) par l'intermédiaire d'un système d'entrée (4) du moteur à combustion interne (2).

4. Appareil suivant l'une quelconque des revendications 1 à 3, **caractérisé en ce qu'**une soupape de détente (13) servant à évacuer l'air dans l'atmosphère est disposée à une extrémité d'un conduit dérivé (11) qui est branché à partir d'un conduit d'air sous pression (14) entre la sortie du compresseur (16) et l'entrée d'air sous pression (12) du réservoir (10).

5. Appareil suivant l'une quelconque des revendications 1 à 4, **caractérisé en ce que** le réservoir (10) est constitué d'une cuve dont l'entrée (12) est reliée au fond (26) de la cuve par l'intermédiaire d'un filtre (30).

6. Appareil suivant la revendication 5, **caractérisé en ce que** le filtre (30) est constitué d'un bronze fritté hautement poreux.

7. Appareil suivant la revendication 5 ou 6, **caractérisé en ce que** la sortie (22) est prévue à l'extrémité supérieure de la cuve (10) au dessus du niveau de remplissage (32) de celle-ci.

8. Appareil suivant l'une quelconque des revendications 1 à 7, **caractérisé en ce que** le réservoir (10) a atteint son niveau de remplissage admissible lorsque l'on utilise 75 % de son volume de stockage, de telle sorte qu'un volume d'air d'au moins 25 % reste constamment au-dessus du niveau de remplissage (32) du réservoir.

9. Appareil suivant l'une quelconque des revendications 1 à 8, **caractérisé en ce que** l'entrée d'air sous pression (12) et la sortie (22) présentent chacune un étranglement (13, 23).
